# EUROPEAN PATENT SPECIFICATION

(11) **EP 3 409 527 B1**
(45) Date of publication and mention of the grant of the patent: **08.04.2020**
(21) Application number: 18174866.6
(22) Date of filing: 29.05.2018
(51) Int. Cl.: B60K 35/00, B60K 37/02, B60R 11/00, B60R 11/02

(54) **IN-VEHICLE ELECTRONIC DEVICE**
ELEKTRONISCHE VORRICHTUNG IN EINEM FAHRZEUG
DISPOSITIF ÉLECTRONIQUE EMBARQUÉ

(30) Priority: 02.06.2017 JP 2017109643
(43) Date of publication of application: 05.12.2018
(73) Proprietor: Alpine Electronics, Inc., Tokyo (JP)
(72) Inventor: Otsuka, Tomoki, Iwaki-city, Fukushima (JP)
(74) Representative: Schmitt-Nilson Schraud Waibel Wohlfrom Patentanwälte Partnerschaft mbB

(56) References cited:
- EP-A1- 2 712 767
- EP-A1- 2 955 563
- DE-A1-102012 008 575
- JP-A- 2015 225 174

## Description

The present invention relates to an in-vehicle electronic device that reciprocates a device main body such as a display.

EP 2 712 767 A1 shows a first drive arm and a second drive arm rotatably provided. A tip portion of the first drive arm and a device main body are connected to each other through a first connection link, and a tip portion of a second drive arm and the device main body are connected to each other through a second connection link.

WO 2013/189610 A2 describes an invention related to an in-vehicle screen adjustment device as an in-vehicle electronic device. In this device, a housing is provided with a pair of guide shafts, and a screen member is slidably supported by the guide shafts. The housing is provided with a pair of rotating gears, a pair of link members are rotated by the rotating gears, and the screen member is moved between a lowered position and a raised position.

In an example described in Fig. 6 of WO 2013/189610 A2, a pair of thrust members sandwiching the guide shaft are provided inside a bracket provided in the screen member, and each thrust member is urged against the guide shaft by a spring member. This structure prevents rattling between the screen member and the guide shaft.

However, in the in-vehicle screen adjustment device described in WO 2013/189610 A2, it is necessary to provide a pair of thrust members sandwiching the guide shaft and spring members urging the thrust members in each of a plurality of bearing portions of the screen member, and therefore the number of parts and the assembly man-hours are increased, which causes an increase in cost.

Further, in the structure shown in Fig. 6 of WO 2013/189610 A2, since the length of the spring members urging the thrust members against the guide shaft is very short, the spring constant of the spring members has to be increased in order to press the thrust members against the guide shaft with sufficient force. As a result, the urging load greatly fluctuates due to a slight change in the set length of the spring members, the urging force may be too weak or conversely excessive, and it is difficult to uniformly press the thrust members provided at a plurality of positions against the guide shaft.

An object of the present invention is to provide an in-vehicle electronic device capable of applying an appropriate load between a moving member and a guide shaft without providing a special urging member between the moving member and the guide member.

The invention relates to an in-vehicle electronic device according to the appended claims. Embodiments are disclosed in the dependent claims.

In an aspect of the present invention, an in-vehicle electronic device includes at least one guide portion provided in a fixed portion, a moving member movably reciprocatively supported by the at least one guide portion, a device main body mounted on the moving member, and a drive portion configured to reciprocate the moving member along the at least one guide portion. The drive portion is provided with at least one drive arm supported rotatably about a rotation shaft located between the drive portion and the fixed portion and configured to apply reciprocating force to the moving member, and a drive source configured to rotate the at least one drive arm. The at least one drive arm has an elastic portion, and the deflection is imparted to the elastic portion, the moving member is urged against the at least one guide portion by elastic force exerted by the deflection of the elastic portion in the direction of the axial center line of the rotation shaft.

It is preferable that the at least one guide portion include a pair of guide portions, the at least one drive arm include a pair of drive arms, the elastic portions be directed toward the respective drive arms, and the moving member be urged against the respective guide portions by the pair of drive arms.

It is preferable that at least part of the at least one drive arm be formed of a metal plate, at least part of the metal plate be the elastic portion.

It is preferable that the at least one drive arm have a proximal portion rotatably supported by the fixed portion, a distal portion connected to the moving member, and the elastic portion located between the proximal portion and the distal portion, and the cross-sectional area of the proximal portion be larger than the cross-sectional area of the elastic portion.

It is preferable that the at least one drive arm have an arm portion forming the elastic portion and made of a metal plate, and a gear portion integrated with the arm portion in the proximal portion and made of synthetic resin.

It is preferable that the distal portion be connected via a link member or directly to the moving member.

It is preferable that the device main body be a display, and the display be moved between a non-display position and a display position by the reciprocating movement of the moving member.

In the in-vehicle electronic device of the present invention, an appropriate frictional force can be applied between the moving member and the guide portion by the drive arm that applies a moving force to the moving member. Therefore, unlike the conventional art, spring members for urging the moving member are unnecessary, the number of parts can be reduced, the assembly man-hours can be reduced, and cost reduction can be achieved.

In addition, since the free length of the elastic portion of the drive arm can be secured long, the spring constant can be appropriately set, and a balanced load can be applied to the plurality of bearing portions between the moving member and the guide portion by the drive arm, and the moving member can be reciprocated smoothly.
Fig. 1 is a perspective view showing an in-vehicle electronic device according to an embodiment of the present invention;
Fig. 2 is a front view showing a state in which the device main body is raised to the display position in the in-vehicle electronic apparatus of the embodiment shown in Fig. 1;
Figs. 3A and 3B are perspective views showing a pair of drive arms provided in the in-vehicle electronic device of the embodiment shown in Fig. 1; and
Fig. 4A is a plan view of the first drive arm, and Fig. 4B is a front view thereof.

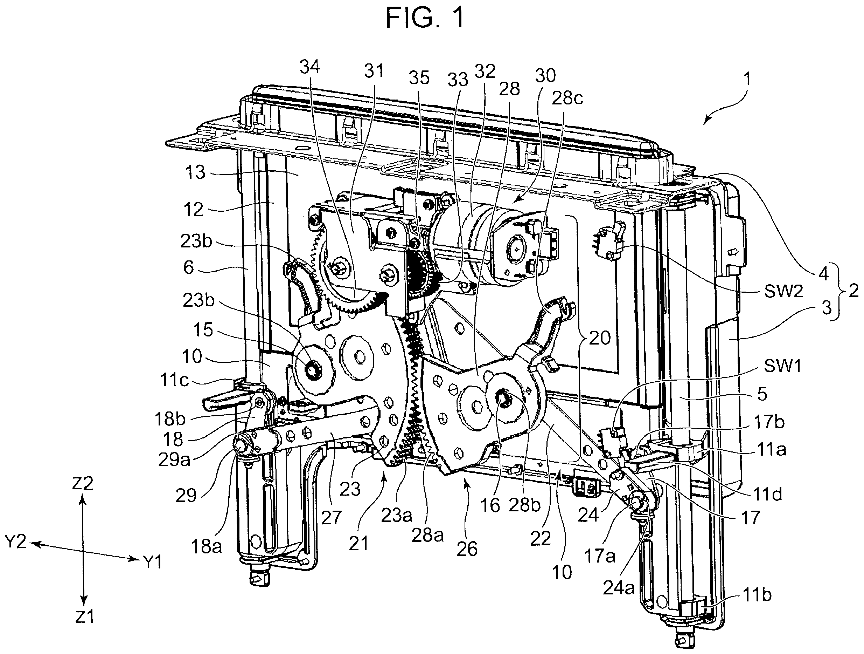

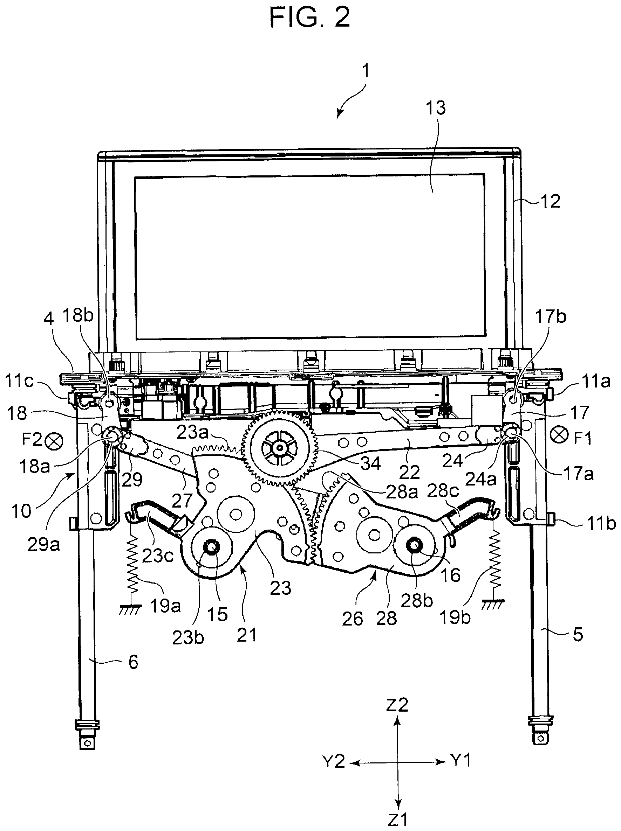

Fig. 1 is a perspective view showing a state in which a display 12 serving as a device main body is lowered and in a retracted position in an in-vehicle electronic device 1 according to an embodiment of the present invention. Fig. 2 is a front view showing a state in which the display 12 projects upward and is in a display position in the in-vehicle electronic device 1.

As shown in Fig. 1, the in-vehicle electronic device 1 has a fixed frame 3. A cover member 4 is fixed to the upper part of the fixed frame 3. A front frame (not shown) is fixed to the front side in the figure of the fixed frame 3 shown in Fig. 1. The fixed frame 3, the front frame and the cover member 4 constitute a fixed portion 2. The fixed frame 3, the front frame and the cover member 4 are all made of synthetic resin. Alternatively, only the cover member 4 is made of a metal plate.

The in-vehicle electronic device 1 is installed in an instrument panel, a center console, or the like in a vehicle interior of an automobile. The fixed frame 3 and the front frame are fixed inside the instrument panel or the center console, and the cover member 4 is fixed in the vicinity of the upper surface of the instrument panel or the center console. Fig. 1 shows a retracted position in which the moving member 10 and the display 12 serving as a device main body are lowered in the Z1 direction, and the display 12 is hidden inside the housing of the instrument panel or the center console. Fig. 2 shows a display position (or use position) in which the moving member 10 and the display 12 are raised, and the display 12 projects upward (in the Z2 direction) from the upper surface of the instrument panel or the center console.

A first guide portion 5 and a second guide portion 6 are fixed to the fixed frame 3. The first guide portion 5 and the second guide portion 6 are guide shafts made of metal and having a circular cross section. The first guide portion 5 and the second guide portion 6 are parallel to each other and extend linearly in the vertical direction (Z1-Z2 direction), and their upper ends and lower ends are fixed to the fixed frame 3.

The in-vehicle electronic device 1 is provided with a moving member (lifting member) 10. The moving member 10 is made of synthetic resin, a first bearing portion 11a and a second bearing portion 11b are formed vertically spaced apart from each other on the right side (Y1 side) in the figure, and a third bearing portion 11c is formed on the left side (Y2 side) in the figure. Sliding type thrust bearings are held by the bearing portions 11a, 11b, and 11c, the thrust bearings held by the first bearing portion 11a and the second bearing portion 11b are slidably attached to the first guide portion 5, and the thrust bearing held by the third bearing portion 11c is slidably attached to the second guide portion 6.

The display 12 as a device main body is mounted on the moving member 10. The display 12 is a color liquid crystal display panel or an electroluminescence panel and has a display screen 13. As shown in Fig. 2, when the display 12 serving as a device main body moves upward to the display position together with the moving member 10, the display screen 13 projects above the upper surface of the instrument panel or the center console, and the display screen 13 can be visually observed in the vehicle interior.

As shown in Fig. 1, the in-vehicle electronic device 1 is provided with a drive portion 20. The drive portion 20 has a first drive arm 21 located on the Y2 side, a second drive arm 26 located on the Y1 side, and a drive source 30 located above (Z2 direction) the drive arms 21 and 26. As described above, the front frame (not shown) is provided on the front side in the figure of the fixed frame 3, and the first drive arm 21, the second drive arm 26, and the drive source 30 are supported by the front frame.

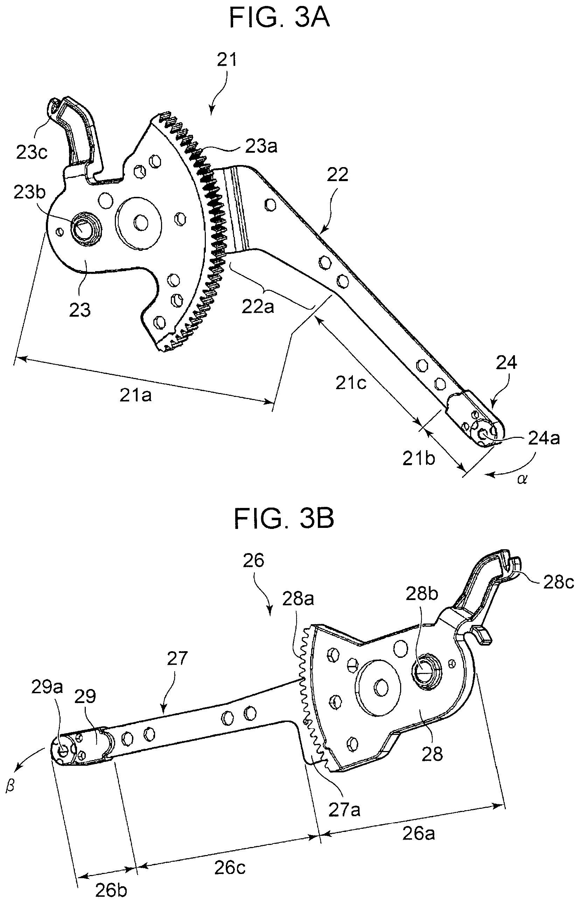

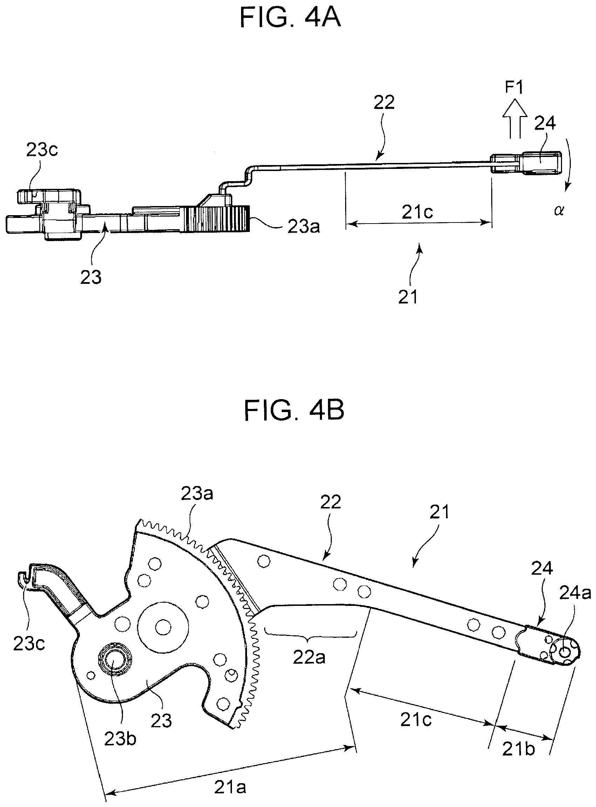

As shown in Figs. 3A, 4A, and 4B, the first drive arm 21 has an arm portion 22, a gear portion 23, and a connecting portion 24. The arm portion 22 is formed of a metal plate, and in the embodiment, it is formed of a stainless steel plate (SUS 304). The gear portion 23 and the connecting portion 24 are made of synthetic resin, and the gear portion 23 and the connecting portion 24 are integrated with the arm portion 22 by a so-called insert molding method.

The first drive arm 21 is roughly divided into a proximal portion 21a, a distal portion 21b, and an elastic portion 21c. The elastic portion 21c is formed by the arm portion 22 made of a metal plate, and its width dimension is constant over its entire length. However, the elastic portion 21c may have such a shape that its width dimension gradually decreases toward the distal portion. The proximal portion 21a is constituted by a proximal side portion 22a of the arm portion 22 and the gear portion 23. In the arm portion 22, the width dimension of the proximal side portion 22a is larger than the width dimension of the arm portion 22 in the elastic portion 21c. That is, in the proximal side portion 22a, the width dimension gradually increases toward the gear portion 23.

A sector gear portion 23a and a bearing hole 23b are formed in the gear portion 23. The pitch circle of the sector gear portion 23a coincides with an arc locus centered at the bearing hole 23b. A spring hook portion 23c is integrally formed in the gear portion 23. A connecting hole 24a is integrally formed in the connecting portion 24 provided in the distal portion 21b.

As shown in Fig. 3B, also in the second drive arm 26, an arm portion 27 formed of a stainless steel plate (SUS 304), and a gear portion 28 and a connecting portion 29 made of synthetic resin are integrated by a so-called insert molding method. The second drive arm 26 is roughly divided into a proximal portion 26a, a distal portion 26b, and an elastic portion 26c. In the elastic portion 26c, the width dimension of the arm portion 27 is constant. The proximal portion 26a is constituted by a proximal side portion 27a of the arm portion 27 and the gear portion 28, and the width dimension of the proximal side portion 27a is larger than the width dimension of the arm portion 27 in the elastic portion 26c. The gear portion 28 has a sector gear portion 28a, a bearing hole 28b, and a spring hook portion 28c. A connecting hole 29a is formed in the connecting portion 29 made of synthetic resin integrated with the distal portion 26b.

As shown in Fig. 1 and Fig. 2, rotation shafts 15 and 16 are fixed to the front frame (not shown) provided on the front side of the fixed frame 3. The bearing hole 23b formed in the gear portion 23 of the first drive arm 21 is rotatably supported by the rotation shaft 15, and the bearing hole 28b formed in the gear portion 28 of the second drive arm 26 is rotatably supported by the rotation shaft 16. At this time, the sector gear portion 23a provided in the proximal portion 21a of the first drive arm 21 and the sector gear portion 28a provided in the proximal portion 26a of the second drive arm 26 are in mesh with each other.

As shown in Figs. 1 and 2, the connecting portion 24 provided in the distal portion 21b of the first drive arm 21 is connected to the Y1 side end of the moving member 10 via a link member 17. A connecting shaft 17a provided at one end of the link member 17 is rotatably inserted into the connecting hole 24a formed in the connecting portion 24 of the first drive arm 21. The other end of the link member 17 and the Y1 side end of the moving member 10 are rotatably connected via a supporting and connecting shaft 17b.

Similarly, the connecting portion 29 provided in the distal portion 26b of the second drive arm 26 is connected to the Y2 side end of the moving member 10 via a link member 18. A connecting shaft 18a provided at one end of the link member 18 is rotatably inserted into the connecting hole 29a formed in the connecting portion 29 of the second drive arm 26. The other end of the link member 18 and the Y2 side end of the moving member 10 are rotatably connected via a supporting and connecting shaft 18b.

In the present invention, it is not absolutely necessary to provide the link members 17 and 18. For example, an elongated hole may be formed in the connecting portion 24 of the first drive arm 21, the supporting and connecting shaft 17b provided in the moving member 10 may be inserted into the elongated hole, and the first drive arm 21 and the moving member 10 may be directly connected. Similarly, an elongated hole may formed in the connecting portion 29 of the distal portion 26b of the second drive arm 26, the supporting and connecting shaft 18b may be inserted into the elongated hole, and the second drive arm 26 may be directly connected to the moving member 10.

As shown in Fig. 1, the drive source 30 has a drive bracket 31. The drive bracket 31 is fixed to the front frame (not shown). A drive motor 32, a reduction gear 33 and a drive gear 34 are supported by the drive bracket 31. A worm gear 35 is fixed to the output shaft of the drive motor 32, the rotational output of the drive motor 32 is decelerated by the worm gear 35 and the reduction gear 33, and the drive gear 34 is driven. A pinion gear whose pitch circle is smaller than the drive gear 34 is formed integrally with the drive gear 34, and this pinion gear meshes with the sector gear portion 23a of the first drive arm 21.

As shown in Fig. 2, a tension coil spring 19a is hooked between the front frame (not shown) and the spring hook portion 23c of the first drive arm 21, and a tension coil spring 19b is hooked between the front frame and the spring hook portion 28c of the second drive arm 26. The urging force of the tension coil springs 19a and 19b suppresses the engagement backlash between the sector gear portion 23a and the sector gear portion 28a and the backlash between the sector gear portion 23a and the pinion gear.

As shown in Fig. 1, in the front frame (not shown), a retracted position detection switch SW1 and a display position detection switch SW2 are provided vertically spaced apart from each other. A detection protrusion 11d is formed integrally with the moving member 10, and the retracted position detection switch SW1 and the display position detection switch SW2 are caused to operate by the detection protrusion 11d.

In the first drive arm 21, the bearing hole 23b of the gear portion 23 is supported by the rotation shaft 15 fixed to the front frame, and the connecting portion 24 of the distal portion 21b is connected to the Y1 side end of the moving member 10 via the link member 17. At this time, the first drive arm 21 is attached in a state where the connecting portion 24 is displaced with respect to the gear portion 23 in the α direction shown in Fig. 4A. Due to this displacement α, the arm portion 22 formed of a stainless steel plate is deflected in the plate thickness direction, and due to the elastic reaction force thereof, an urging force F1 directed toward the back side of the plane of the paper in Fig. 2 is applied from the connecting portion 24 to the Y1 side end of the moving member 10. The displacement α and the deflection direction of the arm portion 22 are parallel to the axial center line of the rotation shaft 15 of the first drive arm 21 and are perpendicular to the direction in which the first guide portion 5 extends. Therefore, the urging force F1 is always constant even when the rotation angle of the first drive arm 21 is changed.

In the arm portion 22 of the first drive arm 21, deflection occurs mainly in the elastic portion 21c having a small width dimension and small cross-sectional area, and the urging force F1 is applied to the movable member 10 due to this deflection. Although deflection also occurs in the proximal side portion 22a of the arm portion 22, since the width dimension and cross-sectional area of the proximal side portion 22a are larger than those of the elastic portion 21c, the deflection in the proximal side portion 22a is smaller than the deflection in the elastic portion 21c. In addition, since the width dimension of the proximal side portion 22a gradually increases toward the gear portion 23, the deflection and stress occurring in the arm portion 22 is less likely to be transmitted to the gear portion 23, and deformation or the like of the sector gear portion 23a can be suppressed.

Also in the second drive arm 26, the bearing hole 28b of the gear portion 28 is supported by the rotation shaft 16 fixed to the front frame, and the connecting portion 29 of the distal portion 26b is connected to the Y2 side end of the moving member 10 via the link member 18. In a state where the second drive arm 26 is attached, the connecting portion 29 is displaced with respect to the gear portion 28 in the β direction shown in Fig. 3B. Due to this displacement β, the arm portion 27 formed of a stainless steel plate is deflected in the plate thickness direction, and due to the elastic reaction force thereof, an urging force F2 directed toward the back side of the plane of the paper in Fig. 2 is applied from the connecting portion 29 to the Y2 side end of the moving member 10.

As shown in Fig. 3B, in the arm portion 27 of the second drive arm 26, deflection occurs mainly in the elastic portion 26c having a small width dimension and small cross-sectional area, and the urging force F2 is applied to the movable member 10. Since the width dimension and cross-sectional area of the proximal side portion 27a of the arm portion 27 are large, the deflection in this portion is smaller than that of the elastic portion 26c. Therefore, the deflection and stress occurring in the elastic portion 26c is less likely to be transmitted to the gear portion 28, and deformation or the like of the sector gear portion 28a can be suppressed.

Next, the operation of the in-vehicle electronic device 1 will be described.

Fig. 1 shows the retracted position in which the display 12 serving as a device main body is lowered. At this time, the retracted position detection switch SW1 is caused to operate by the detection protrusion 11d provided at the Y1 side end the of the moving member 10, and the drive motor 32 is stopped based on the detection signal.

When an operation signal for setting the display 12 to the display position is given to a control unit (not shown), a drive command is issued to a motor driver, and the drive motor 32 is started. Its output is decelerated by the worm gear 35 and the reduction gear 33 and transmitted from the pinion gear integrated with the drive gear 34 to the sector gear portion 23a of the first drive arm 21. The first drive arm 21 rotates counterclockwise from the position of Fig. 1, and the second drive arm 26 rotates clockwise due to engagement between the sector gear portion 23a and the sector gear portion 28a. The rotating force of the first drive arm 21 is transmitted to the moving member 10 via the link member 17, the rotating force of the second drive arm 26 is transmitted to the moving member 10 via the link member 18, and the moving member 10 is lifted to the display position as shown in Fig. 2. When the display position detection switch SW2 is caused to operate by the detection protrusion 11d provided in the moving member 10, a stop command is given to the motor driver from the control unit.

When the moving member 10 stops at the raised position shown in Fig. 2, the display 12 projects upward from the cover member 4 and is in the display position in which the display screen 13 is exposed.

When the moving member 10 moves up and down while being guided by the first guide portion 5 and the second guide portion 6, due to the deflection mainly of the elastic portion 21c of the arm portion 22 of the first drive arm 21, the urging force F1 for pressing the Y1 side end of the moving member 10 against the first guide portion 5 is given. Similarly, due to the deflection mainly of the elastic portion 26c of the arm portion 27 of the second drive arm 26, the urging force F2 for pressing the Y2 side end of the moving member 10 against the second guide portion 6 is given.

Therefore, the first bearing portion 11a and the second bearing portion 11b of the moving member 10 stably abut on and slide on the first guide portion 5, and the third bearing portion 11c stably abuts on and slides on the second guide portion 6. As a result, occurrence of stick-slip when the moving member 10 moves up and down can be prevented, and the moving member 10 can be smoothly raised and lowered. In addition, rattling due to the clearance between the bearing portions 11a, 11b, and 11c provided in the moving member 10 and the guide portions 5 and 6 can be suppressed.

Since the in-vehicle electronic device 1 is not provided with spring members only for the purpose of restricting rattling between the moving member 10 and the guide portions 5 and 6, the number of parts can be reduced, the assembly man-hours can be reduced, and the manufacturing cost can be suppressed.

Since the elastic portion 21c of the arm portion 22 of the first drive arm 21 and the elastic portion 26c of the arm portion 26 of the second drive arm 26 can be formed long, even if the spring constants of the arm portions 22 and 26 are made relatively small, the urging forces F1 and F2 can be set to sufficient magnitudes. As a result, it is easy to set the balance between the urging force F1 and the urging force F2, and fluctuation of the urging force F1 and the urging force F2 is unlikely to occur.

Although, in the above embodiment, the device main body supported by the moving member 10 is a display, the device main body may be other than a display 12, for example, a disk tray, a recording medium attachment portion therefor, or a tray on which a glass is placed.

## Claims

1. An in-vehicle electronic device (1) comprising: at least one guide portion (5, 6) provided in a fixed portion (2); a moving member (10) movably reciprocatively supported by the at least one guide portion (5, 6); a device main body (12) mounted on the moving member (10); and a drive portion (20) configured to reciprocate the moving member (10) along the at least one guide portion (5, 6),
wherein the drive portion (20) is provided with at least one drive arm (21, 26) supported rotatably about a rotation shaft (15, 16) located between the drive portion (20) and the fixed portion (2) and configured to apply reciprocating force to the moving member (10), and a drive source (30) configured to rotate the at least one drive arm (21, 26), and
**characterized in that**
the at least one drive arm (21, 26) has an elastic portion (21c, 26c), and deflection is imparted to the elastic portion (21c, 26c), the moving member (10) is urged against the at least one guide portion (5, 6) by elastic force exerted by the deflection of the elastic portion (21c, 26c) in the direction of the axial center line of the rotation shaft (15, 16).

2. The in-vehicle electronic device (1) according to claim 1, wherein the at least one guide portion (5, 6) comprises a pair of guide portions (5, 6), the at least one drive arm (21, 26) comprises a pair of drive arms (21, 26), the elastic portions (21c, 26c) are directed toward the respective drive arms (21, 26), and the moving member (10) is urged against the respective guide portions (5, 6) by the pair of drive arms (21, 26).

3. The in-vehicle electronic device (1) according to claim 1 or 2, wherein at least part of the at least one drive arm (21, 26) is formed of a metal plate, at least part of the metal plate is the elastic portion (21c, 26c).

4. The in-vehicle electronic device (1) according to any one of claims 1 to 3, wherein the at least one drive arm (21, 26) has a proximal portion (21a, 26a) rotatably supported by the fixed portion (2), a distal portion (21b, 26b) connected to the moving member (10), and the elastic portion (21c, 26c) located between the proximal portion (21a, 26a) and the distal portion (21b, 26b), and the cross-sectional area of the proximal portion (21a, 26a) is larger than the cross-sectional area of the elastic portion (21c, 26c) .

5. The in-vehicle electronic device (1) according to claim 4, wherein the at least one drive arm (21, 26) has an arm portion (22, 27) forming the elastic portion (21c, 26c) and made of a metal plate, and a gear portion (23, 28) integrated with the arm portion (22, 27) in the proximal portion (21a, 26a) and made of synthetic resin.

6. The in-vehicle electronic device (1) according to claim 4 or 5, wherein the distal portion (21b, 26b) is connected via a link member (17, 18) or directly to the moving member (10).

7. The in-vehicle electronic device (1) according to any one of claims 1 to 6, wherein the device main body (12) is a display, and the display (12) is moved between a non-display position and a display position by the reciprocating movement of the moving member (10).

## Patentansprüche

1. In einem Fahrzeug vorgesehene elektronische Vorrichtung (1), aufweisend:
mindestens einen Führungsbereich (5, 6), der in einem feststehenden Bereich (2) vorgesehen ist;
ein bewegliches Element (10), das von dem mindestens einen Führungsbereich (5, 6) hin und her beweglich abgestützt ist;
einen Vorrichtungshauptkörper (12), der an dem beweglichen Element (10) angebracht ist; und
einen Antriebsbereich (20), der zum Hin- und Herbewegen des beweglichen Elements (10) entlang des mindestens einen Führungsbereichs (5, 6) ausgebildet ist,
wobei der Antriebsbereich (20) mit mindestens einem Antriebsarm (21, 26) versehen ist, der um eine Drehwelle (15, 16) drehbar gelagert, die sich zwischen dem Antriebsbereich (20) und dem feststehenden Bereich (2) befindet, und dazu ausgebildet ist, eine Hin- und Herbewegungskraft auf das bewegliche Element (10) aufzubringen, sowie mit einer Antriebsquelle (30) versehen ist, die dazu ausgebildet ist, den mindestens einen Antriebsarm (21, 26) rotationsmäßig zu bewegen,
**dadurch gekennzeichnet,**
**dass** der mindestens eine Antriebsarm (21, 26) einen elastischen Bereich (21c, 26c) aufweist und eine Biegung auf den elastischen Bereich (21c, 26c) aufgebracht wird und das bewegliche Element (10) durch eine elastische Kraft, die durch die Biegung des elastischen Bereichs (21c, 26c) in Richtung der axialen Mittellinie der Drehwelle (15, 16) ausgeübt wird, gegen den mindestens einen Führungsbereich (5, 6) gedrückt wird.

2. In einem Fahrzeug vorgesehene elektronische Vorrichtung (1) nach Anspruch 1,
wobei der mindestens eine Führungsbereich (5, 6) ein Paar Führungsbereiche (5, 6) beinhaltet, wobei der mindestens eine Antriebsarm (21, 26) ein Paar Antriebsarme (21, 26) beinhaltet, wobei die elastischen Bereiche (21c, 26c) in Richtung auf die jeweiligen Antriebsarme (21, 26) gerichtet sind, und wobei das bewegliche Element (10) durch das Paar Antriebsarme (21, 26) gegen die jeweiligen Führungsbereiche (5, 6) gedrückt wird.

3. In einem Fahrzeug vorgesehene elektronische Vorrichtung (1) nach Anspruch 1 oder 2,
wobei mindestens ein Teil des mindestens einen Antriebsarms (21, 26) aus einer Metallplatte gebildet ist und wobei mindestens ein Teil der Metallplatte den elastischen Bereich (21c, 26c) bildet.

4. In einem Fahrzeug vorgesehene elektronische Vorrichtung (1) nach einem der Ansprüche 1 bis 3,
wobei der mindestens eine Antriebsarm (21, 26) einen proximalen Bereich (21a, 26a), der von dem feststehenden Bereich (2) drehbar abgestützt ist, einen distalen Bereich (21b, 26b), der mit dem beweglichen Element (10) verbunden ist, sowie den elastischen Bereich (21c, 26c) aufweist, der sich zwischen dem proximalen Bereich (21a, 26a) und dem distalen Bereich (21b, 26b) befindet, und wobei die Querschnittsfläche des proximalen Bereichs (21a, 26a) größer ist als die Querschnittsfläche des elastischen Bereichs (21c, 26c).

5. In einem Fahrzeug vorgesehene elektronische Vorrichtung (1) nach Anspruch 4,
wobei der mindestens eine Antriebsarm (21, 26) einen Armbereich (22, 27), der den elastischen Bereich (21c, 26c) bildet und aus einer Metallplatte hergestellt ist, sowie einen Zahnradbereich (23, 28) aufweist, der in dem proximalen Bereich (21a, 26a) in den Armbereich (22, 27) integriert ist und aus Kunstharz hergestellt ist.

6. In einem Fahrzeug vorgesehene elektronische Vorrichtung (1) nach Anspruch 4 oder 5,
wobei der distale Bereich (21b, 26b) über ein Verbindungselement (17, 18) oder direkt mit dem beweglichen Element (10) verbunden ist.

7. In einem Fahrzeug vorgesehene elektronische Vorrichtung (1) nach einem der Ansprüche 1 bis 6,
wobei der Vorrichtungshauptkörper (12) eine Anzeige ist und wobei die Anzeige (12) durch die Hin- und Herbewegung des beweglichen Elements (10) zwischen einer Nichtanzeigeposition und einer Anzeigeposition bewegt wird.

## Revendications

1. Dispositif électronique embarqué (1) comprenant : au moins une portion (5, 6) faisant office de guidage prévue dans une portion fixe (2) ; un élément mobile (10) supporté, de manière à pouvoir effectuer un mouvement de va-et-vient, par ladite au moins une portion (5, 6) faisant office de guidage ; un corps principal de dispositif (12) monté sur l'élément mobile (10) ; et une portion faisant office d'entraînement (20) configurée pour imprimer à l'élément mobile (10) un mouvement de va-et-vient le long de ladite au moins une portion (5, 6) faisant office de guidage ;
dans lequel la portion faisant office d'entraînement (20) est munie d'au moins un bras d'entraînement (21, 26) qui est supporté en rotation autour d'un arbre de rotation (15, 16) qui est disposé entre la portion faisant office d'entraînement (20) et la portion fixe (2) et qui est configuré pour exercer une force en va-et-vient sur l'élément mobile (10), et d'une source d'entraînement (30) configurée pour la mise en rotation dudit au moins un bras d'entraînement (21, 26) ; et
**caractérisé en ce que**
ledit au moins un bras d'entraînement (21, 26) possède une portion élastique (21c, 26c) et une déformation est conférée à la portion élastique (21c, 26c), l'élément mobile (10) est pressé contre ladite au moins une portion (5, 6) faisant office de guidage par l'intermédiaire de la force élastique exercée par la déformation de la portion élastique (21c, 26c) dans la direction de la ligne centrale axiale de l'arbre de rotation (15, 16).

2. Dispositif électronique embarqué (1) selon la revendication 1, dans lequel ladite au moins une portion (5, 6) faisant office de guidage comprend une paire de portions (5, 6) faisant office de guidage, ledit au moins un bras d'entraînement (21, 26) comprend une paire de bras d'entraînement (21, 26), les portions élastiques (21c, 26c) sont orientées dans la direction des bras d'entraînement respectifs (21, 26), et l'élément mobile (10) est pressé contre les portions respectives (5, 6) faisant office de guidage par l'intermédiaire de la paire de bras d'entraînement (21, 26).

3. Dispositif électronique embarqué (1) selon la revendication 1 ou 2, dans lequel au moins une partie dudit au moins un bras d'entraînement (21, 26) est réalisée à partir d'une plaque métallique, au moins une partie de la plaque métallique représentant la portion élastique (21c, 26c).

4. Dispositif électronique embarqué (1) selon l'une quelconque des revendications 1 à 3, dans lequel ledit au moins un bras d'entraînement (21, 26) possède une portion proximale (21a, 26a) supportée en rotation par la portion fixe (2), une portion distale (21b, 26b) reliée à l'élément mobile (10), et la portion élastique (21c, 26c) est située entre la portion proximale (21a, 26a) et la portion distale (21b, 26b), et l'aire de section transversale de la portion proximale (21a, 26a) est plus grande que l'aire de section transversale de la portion élastique (21c, 26c).

5. Dispositif électronique embarqué (1) selon la revendication 4, dans lequel ledit au moins un bras d'entraînement (21, 26) possède une portion en forme de bras (22, 27) formant la portion élastique (21c, 26c) et qui est réalisée à partir d'une plaque métallique, et une portion (23, 28) faisant office d'engrenage intégrée avec la portion en forme de bras (22, 27) dans la portion proximale (21a, 26a) et réalisée à partir d'une résine synthétique.

6. Dispositif électronique embarqué (1) selon la revendication 4 ou 5, dans lequel la portion distale (21b, 26b) est reliée par l'intermédiaire d'un élément de liaison (17, 18) ou de manière directe à l'élément mobile (10).

7. Dispositif électronique embarqué (1) selon l'une quelconque des revendications 1 à 6, dans lequel le corps principal de dispositif (12) représente un affichage et l'affichage (12) bascule entre une position de non-affichage et une position d'affichage par l'intermédiaire du mouvement en va-et-vient de l'élément mobile (10).
